# EUROPEAN PATENT SPECIFICATION

(11) **EP 1 118 184 B1**
(45) Date of publication and mention of the grant of the patent: **14.12.2005**
(21) Application number: 00953108.8
(22) Date of filing: 27.07.2000
(51) Int. Cl.: H04L 9/32, G06F 1/00

(54) **UPDATING A REVOCATION LIST TO FOIL AN ADVERSARY**
AKTUALISIERUNG EINER SPERRLISTE UM EINEM WIDERSACHER ENTGEGENZUARBEITEN
MISE A JOUR D'UNE LISTE D'ANNULATIONS POUR CONTRER UN ADVERSAIRE

(30) Priority: 09.08.1999 US 370489
(43) Date of publication of application: 25.07.2001
(73) Proprietor: Koninklijke Philips Electronics N.V., 5621 BA Eindhoven (NL)
(72) Inventor: EPSTEIN, Michael, A., NL-5656 AA Eindhoven (NL)
(74) Representative: Groenendaal, Antonius W. M.
(86) International application number: PCT/EP2000/007275
(87) International publication number: WO 2001/011819

(56) References cited:
- EP-A- 0 892 521
- US-A- 5 261 002
- US-A- 5 687 235
- US-A- 5 699 431
- US-A- 6 092 201

## Description

### BACKGROUND OF THE INVENTION

### 1. Field of the Invention

This invention relates to the field of consumer electronics, and in particular to methods for controlling access to copyright material.

### 2. Description of Related Art

Digital recordings have the unique property that copies of the recorded material have the same quality as the original. As such, the need for an effective copy protection scheme is particularly crucial for the protection of copyright material that is digitally recorded. A number of protection schemes have been developed or proposed that record the content material in an encrypted form. Other protection schemes have been developed or proposed that record an encrypted key or ticket that controls the playback, or rendering, of the content material.

In a number of copy-protection schemes, keys are distributed among compliant devices, and the content material is encrypted such that it can only be decrypted by a unique key within a particular compliant device. For example, an access control system for copy protected material may initially effect a key exchange with the particular compliant device, using for example a Diffie-Hellman key exchange technique, and then encrypt a key for decrypting the content material using the exchanged key. In this manner, only the intended recipient can decrypt the content material. Generally, the access control system does not participate in the key exchange until after the particular compliant device identifies itself, and, in most cases, authenticates this identification, typically via an encrypted signature that can be verified. Other protection schemes that rely upon an identification of the receiving device are common in the art.

An adversarial party to a security system that relies on a unique identifier of a receiver, even a unique identifier that is bound via a certificate to a public key, can foil the system by imitating a valid device. That is, techniques are common in the art for replicating a device, such that, in operation, it is virtually indistinguishable from the original. A common unauthorized business practice is the sale of "black-market" or "pirated" imitations of devices that are used to gain access to protected material.

To foil an adversary, manufacturers publish revocation lists, itemizing each identifier that has been determined to be no longer valid. In principle, the access control system receives an identifier from the intended receiving device, compares this identifier to the list of all invalidated identifications, then grants or denies access accordingly. Each issuing authority periodically publishes a list of the recently revoked identifiers, and this list is communicated to each access control system, using a variety of techniques. If the access control system is a set-top box that only provides broadcast content material to a compliant recorder or display device, for example, the revocation list can be transmitted to the set-top box from the provider of the broadcast services. If the access control system is a consumer DVD player that only plays back a DVD to a compliant display device, the latest revocation list can be embedded within commercial DVD recordings. When the user of the DVD player plays a recently purchased or rented DVD recording, the DVD player reads the embedded list. When the access control system receives a new revocation list, it updates a locally stored list of revocations accordingly. Because the local list at the access control system is of finite size, each access control system is typically configured to delete the oldest revocations when space is required for newer revocations.

Unfortunately, a number of techniques are available to an adversary to counteract this protective scheme. For example, because of the finite size of local lists, a prior revoked identifier will eventually be removed from each active local list. The likelihood that a prior revoked identifier will have been removed from most local lists can be estimated, based on the age of the prior revoked identifier, the number of identifiers revoked since this prior revocation, and the average size of most local lists. Given a sufficiently large likelihood that a prior revoked identifier will have been removed from most local lists, the adversary can again distribute the replicated products based on the prior revoked identifier, with a high likelihood of customer satisfaction. Some customers may be unable to operate the replicated device, because the characteristics of their particular access control system, or the update rate of that access control system, is such that the prior revoked identifier is not yet removed from that access control system's list, but most customers' access control systems will have removed it, and thus will accept the identifier as currently valid. Alternatively, an individual user may merely store a replicated device when it is rejected by the access control system, and periodically attempt to reuse it. Once it is accepted by the access control system again, signaling the removal of the revocation from its list, the user can continue to use the replicated device for a virtually unlimited duration. Alternatively, the adversary or user can submit a list of possible identifiers to one or more access control systems to search for an identifier that is no longer on the list.

US 5,687,235 discloses a certificate revocation service that, in response to a request from a server, selects serial numbers of certain revoked certificates from a certificate revocation list (CRL) to be included in its reply so as to consume minimal system bandwidth. The service may select all, part or none of the revoked certificate serial numbers. The selection of only a part of the revoked certificate serial numbers is done to create an "incremental" CRL or to respond only with the revocation status of a particular certificate, if such status is requested by the server.

### BRIEF SUMMARY OF THE INVENTION

It is an object of this invention to decrease the customer satisfaction with an unauthorized replication of an authorized identifier. It is a further object of this invention to decrease the benefits derived from an unauthorized replication of an authorized identifier. It is a further object of this invention to foil attempts to determine the likelihood that a particular revoked identifier will be accepted by an access control system.

These objects and others are achieved by randomizing the lists used to verify whether a received identifier has been revoked. When the access control system updates its local revocation list, a non-deterministic method is used to determine the resultant content of the local revocation list. In accordance with another aspect of this invention, the communication of the revoked identifiers is also based on a non-deterministic selection of revoked identifiers. In this manner, the mere passage of time will not necessary result in a prior revoked identifier becoming revived. The replicated device will become "unreliable", in that the user can never be assured that the replicated device will operate "properly". In accordance with another aspect of this invention, the enforcement of the revocation is also randomized. For example, the access control system may initially provide the content material to a device having a revoked identifier, then, at some random time later, terminate the transmission. In this manner, a user of a replicated device can never be assured that the content material, such as a movie, can be viewed in its entirety.

### BRIEF DESCRIPTION OF THE DRAWINGS

The invention is explained in further detail, and by way of example, with reference to the accompanying drawings wherein:
FIG. 1 illustrates an example block diagram of an access control system in accordance with this invention.
FIG. 2 illustrates an example system for providing revoked identifiers to an access control system in accordance with this invention.
FIG. 3 illustrates an example flow diagram for maintaining a local revocation list in accordance with this invention.
FIG. 4 illustrates an example flow diagram for controlling access to content material in accordance with this invention.

Throughout the drawings, same reference numerals indicate similar or corresponding features or functions.

### DETAILED DESCRIPTION OF THE INVENTION

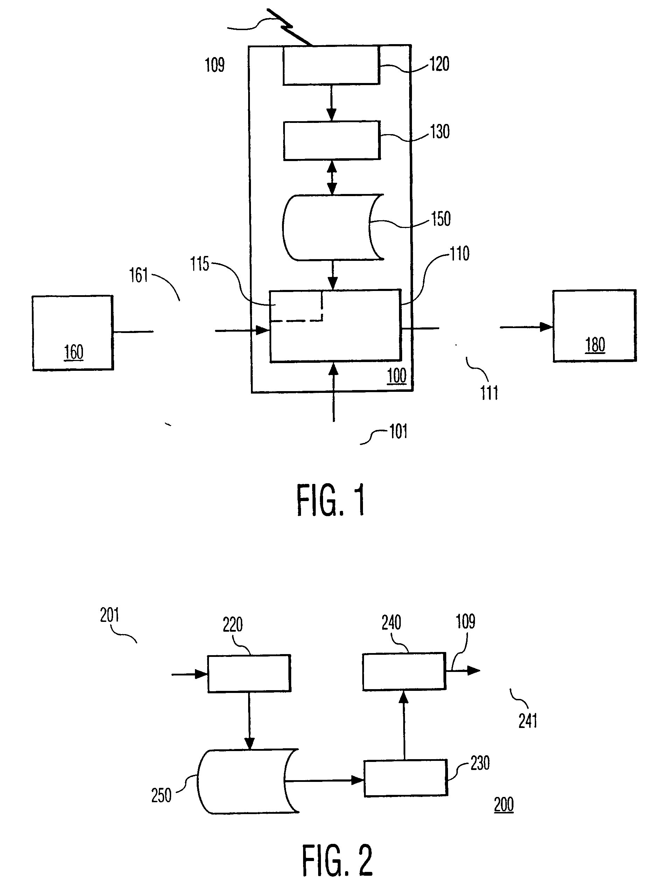

FIG. 1 illustrates an example block diagram of an access control system 100 in accordance with this invention. The access control system 100 receives controlled content material 161, and, if provided an authorized access identifier 101, provides accessed content material 111 corresponding to the controlled content material 161. For ease of understanding, this invention is presented using a consumer entertainment paradigm, such as the access control techniques that are used to control access to pay-per-view transmissions, or to control the number of copies that can be made of copy-protected material. Other access control applications based on the principles presented herein will be evident to one of ordinary skill in the art. Generally, the controlled content material 161 is encrypted material, and an access device 110 within the control system 100 decrypts the encrypted material to create the accessed content material 111 for rendering to a user, for example, for display on a display device 180. The controlled content material 161 is illustrated as being provided by a playback device 160, which could be, for example, a CD, DVD, or video disc player, a magnetic tape or hard-drive system, and so on. Alternatively, the controlled content material 161 may also be provided by a broadcast, satellite, or cable service provider. As is common in the art, the controlled content material 161 may be communicated among a variety of devices, for example, to and from a recording device after being received from a service provider, and so on.

The access device 110 provides the accessed content material 111 if and only if a valid access identifier 101 is provided. Generally, the access identifier 101 is a unique identifier that is associated with a key and is digitally signed by a special key that is known only to a "trusted authority", typically an authorized vendor or manufacturer, or the provider of the service. The access identifier 101 may be contained within a "smartcard" that identifies the user, a pre-paid card purchased by the user, a set-top box that identifies an account number for charging fees, and so on. Alternatively, the access identifier 101 may be a unique identifier of a manufactured item, such as a tape recorder, that is manufactured to enforce agreed upon copy-limit standards, as discussed, for example, in copending international patent application WO 00/004549.

The aforementioned trusted authorities publish lists that comprise access identifiers that have been discovered to have been inappropriately used, and therefore revoked. For example, unauthorized copies of recorded material may contain the access identifier that was used to originally access the material, lost or stolen "smartcards" may be revoked, and so on. Consistent with prior art devices, revoked identifiers 109 may be broadcast to access control systems 100 in a variety of forms, typically via the medium used to convey the content material. The access control system 100 includes a receiver 120 for receiving the broadcast revoked identifiers 109, and a memory for containing a local revocation list 150. Depending upon the broadcast means, the receiver 120 is typically a device that extracts the revoked identifiers 109 from the medium used to convey the controlled content material 161. For example, each published DVD or CD may contain a list of recently revoked identifiers 109. The receiver 120 may also be a dedicated device that receives the broadcast revoked identifiers 109 from a cable provider via a control channel, and so on.

The local revocation list 150 is of finite size, and eventually will be filled with the received revoked identifiers 109. In accordance with one aspect of this invention, the replacer 130 is configured to randomly replace a previous entry in the list 150 with each received revoked identifier 109. The term random is used herein in the most general sense, and includes pseudo-random and any of a variety of unordered or non-deterministic selection techniques common in the art. The random selection need not be purely random, and may include a weighted-random process that may be skewed to preferably, but not exclusively, choose older identifiers for replacement. By using a random replacement technique, even if not purely random, the likelihood of a particular revoked identifier 109 being present in the list 150 is substantially less determinable than prior methods, such as First-In-First-Out, Newest-In-Oldest-out, and other conventional ordered list management techniques. Thus, an adversary cannot rely on the mere passage of time to foil the limited security provided by a finite sized local revocation list 150.

FIG. 2 illustrates an example system 200 for broadcasting revoked identifiers 109 to an access control system in accordance with this invention. The access control system may be a conventional access control system or an access control system 100 that is configured in accordance with the first aspect of this invention, discussed above. The published revoked identifiers 201 are received from one or more trusted authorities via a receiver 220, and stored in a master revocation list 250 that is substantially larger than the local revocation list 150 at an access control system 100. For example, the system 200 may be located at a cable service headquarters, or a disc manufacturing plant, and the master revocation list 250 may be resident in a database of virtually unlimited size. In accordance with another aspect of this invention, the selector 230 randomly selects published revoked identifiers 201 from the master revocation list 250 for encoding as broadcast revoked identifiers 109 that are communicated to the remote access control system 100 via the transport media 241. The encoder 240 encodes the published revoked identifiers that are selected for broadcasting into a form suitable for the particular transport media 241. For example, the broadcast revoked identifier 109 may be a signal that is multiplexed onto a carrier wave, encoded on a track of a CD or DVD, included in the header of a VCR tape, and so on.

By randomly selecting the broadcast revoked identifiers 109 from the master revocation list 250 of all published revoked identifiers 201, the likelihood of a particular revoked identifier in the master revocation list 250 being communicated to an access control device 100 is substantially less determinable than prior methods of communicating the most recently revoked identifiers. This aspect of the invention also allows the benefits gained by random selection to be realized by some conventional access control devices, albeit to a lesser degree. That is, for example, a conventional access control device that uses a First-In-First-Out (FIFO) list management technique will be presented a random selection of revoked identifiers of various ages, and an adversary cannot rely on the mere passage of time to foil the limited security provided by a finite sized FIFO list. In like manner, the selector 230 may update the revocation date of the randomly selected identifier, so that a control access device that utilizes a conventional "oldest-out" list management technique will also be provided the benefits of this invention.

Thus, as presented herein, by utilizing a somewhat random selection technique, for either selecting the revoked identifiers that are communicated to the access device, or selecting the revoked identifiers in the local list to be replaced, or both, the likelihood of an access identifier being accepted by an access device 100 is less predictable than the prior art, ordered, techniques. Thus, the customers who purchase unauthorized devices having revoked access identifiers will experience unpredictable results. This unpredictability can be expected to decrease the popularity of such unauthorized devices, and thereby potentially reduce the market for such devices.

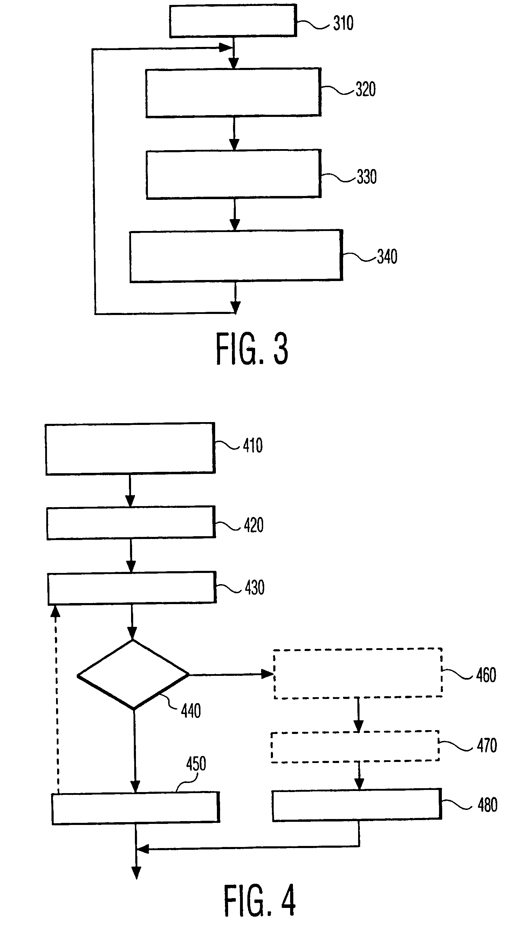

FIG. 3 illustrates an example flow diagram for maintaining a local revocation list, such as may be used by an access control system 100, in accordance with this invention. The initialization block 310 represents the activity before the local list of revoked identifiers becomes full. At 320, a new revoked identifier is received, and at 330, an index into the local list of revoked identifiers is selected for placing this new revoked identifier. In accordance with the first aspect of this invention, this selection is random. At 340, the new revoked identifier is placed in the local list of revoked identifiers, at a location identified by the randomly selected index, and control returns to block 320, awaiting the next new revoked identifier.

FIG. 4 illustrates an example flow diagram for controlling access to content material, such as may be used by an access control system 100, in accordance with this invention. At 410, an access request and the access identifier are received. Not illustrated, the block 410 checks the validity of the access identifier, for example, by decrypting the access identifier using a key that is associated with the trusted authority that provided the access identifier. In response to the access request, access is initially granted for a valid access identifier, at 420, and then the access identifier is checked to see if it has been revoked, via the loop 430-450. If the access identifier matches an entry in the local list of revoked identifiers, at 440, access is terminated, at 480. In accordance with another aspect of this invention, if a match is found in the local list, the matching entry in the list is marked as non-replaceable, at 460. In this manner, the same unauthorized access identifier will not be replaced by subsequent revoked identifiers, and thereby become usable in the future. In accordance with another aspect of this invention, the access device 110 of FIG. 1 includes a timer 115, and the access is terminated after a delay, at 470. By delaying the termination of the access, a customer who acquires a device having a revoked identifier will be further annoyed by being allowed to view a portion of the content material, such as a movie, then being prevented from viewing, for example, the climax and conclusion of the movie. The time delay may be based on the duration of the content material, or it may be a fixed or random delay period. As noted above, by increasing the annoyance factor associated with devices with unauthorized access identifiers, the market for such devices can be expected to decrease.

The foregoing merely illustrates the principles of the invention. It will thus be appreciated that those skilled in the art will be able to devise various arrangements which, although not explicitly described or shown herein, embody the principles of the invention. For example, copending international patent application WO 01/011878; presents methods and applications for exchanging cryptography keys between authorized devices. The principles of this invention can be applied to verify that the devices that are exchanging keys are authorized devices. The particular structures and functions are presented in the figures for illustration purposes. Other configurations are also feasible. For example, the access control system 100 of FIG. I may be embedded within the playback 160, display 180, or other device. In like manner, access need not be granted, in block 420 of FIG. 4, to the controlled content material until after it is verified, via the loop 430-450 that the access identifier has not been revoked. These and other system configuration and optimization features will be evident to one of ordinary skill in the art in view of this disclosure.

## Claims

1. A system comprising:
a local revocation list (150) that contains a plurality of revoked identifiers,
an access device (110) that controls access to content material (161, 111) based on a comparison of an access identifier (101) to the plurality of revoked identifiers, and
a receiver (120) that receives at least one new revoked identifier (109), **characterized by**
a replacer (130) that randomly replaces at least one revoked identifier of the plurality of revoked identifiers with the at least one new revoked identifier (109).

2. The system of claim 1, wherein
the access device (110) inhibits access after a time duration from an initial access to the content material (111).

3. The system of claim 1, wherein
the time duration is based on at least one of: a duration associated with the content material (111, 161), a random duration, and a predetermined duration.

4. The system of claim 1, wherein
the access identifier (101) includes a cryptographic certification.

5. The system of claim 1, wherein
the replacer (130) excludes a previously revoked identifier in the local revocation list (150) for random replacement based on the comparison of the access identifier (101) with the previously revoked identifier.

6. A system comprising:
a receiver (220) that is configured to receive a first plurality of newly revoked identifiers (201) from one or more trusted authorities,
a selector (230) that is configured to select a second plurality of new revoked identifiers (109) from the first plurality of newly revoked identifiers (201) and a plurality of previously revoked identifiers, and
a means for communicating the second plurality of new revoked identifiers (109) to an access device (110),
**characterized in that** the selector (230) selects the second plurality of new revoked identifiers (109) based on a random process.

7. The system of claim 6, wherein
the means for communicating the second plurality includes:
an encoder (240) that embeds the second plurality within a medium (241) that contains content material (161).

8. A method of facilitating revocable access control comprising:
receiving (220) a first plurality of newly revoked identifiers (201) from one or more trusted authorities,
selecting (230) a second plurality of new revoked identifiers (109) from the first plurality of newly revoked identifiers (201) and a plurality of previously revoked identifiers, and
communicating the second plurality of new revoked identifiers (109) to an access device (110),
**characterized by** selecting the second plurality of new revoked identifiers (109) based on a random process.

9. The method of claim 8, wherein
the step of communicating the second plurality includes:
encoding (240) the second plurality within a medium (241) that contains content material (161).

10. A method for controlling access to content material (111, 161), comprising:
maintaining a list of revoked identifiers (150),
receiving (320) a new revoked identifier (109),
receiving (410) an access identifier (101),
inhibiting (480) access to the content material (161) based on a comparison (440) of the access identifier (101) to the list of revoked identifiers (150),
**characterized by**
selecting (330) a random revoked identifier from the list of revoked identifiers (150),
replacing (340) the random revoked identifier in the list of revoked identifiers (150) with the new revoked identifier (109).

11. The method of claim 10, wherein the step of inhibiting access includes
granting (420) access during an initial time duration, and
inhibiting (480) access after (470) the initial time duration.

12. The method of claim 11, further including
determining the initial time duration based on at least one of: a random process, a duration associated with the content material (111, 161), and a predetermined time duration.

13. The method of claim 10, further including
marking (460) a previously revoked identifier of the list of revoked identifiers (150) to exclude it from selection as the random revoked identifier, based on the comparison of the access identifier (101) to the list of revoked identifiers (150).

## Patentansprüche

1. System, das die nachfolgenden Elemente umfasst:
- eine örtliche Sperrliste (150) die eine Anzahl annullierter Identifizierer enthält,
- eine Zugriffsanordnung (110) die den Zugriff auf das Content-Material (161, 111) steuert, und zwar auf Basis eines Vergleichs eines Zugriffsidentifizierers (101) auf die Anzahl annullierter Identifizierer, und
- einen Empfänger (120), der wenigstens einen neuen annullierten Identifizierer (109) empfängt,
**gekennzeichnet durch**:
- einen Austauscher (130), der beliebig wenigstens einen annullierten Identifizierer der Anzahl annullierter Identifizierer gegen wenigstens einen neuen annullierten Identifizierer (109) austauscht.

2. System nach Anspruch 1, wobei
- die Zugriffsanordnung (110) Zugriff sperrt, und zwar nach einer Zeitdauer von einem Anfangszugriff auf das Content-Material (111).

3. System nach Anspruch 1, wobei:
- die Zeitdauer auf wenigstens einem der Elemente basiert: einer Dauer, assoziiert mit dem Content-Material (111, 116), einer beliebigen Dauer, und einer vorbestimmten Dauer.

4. System nach Anspruch 1, wobei:
der Zugriffsidentifizierer (101) eine kryptographische Bescheinigung enthält.

5. System nach Anspruch 1, wobei:
der Austauscher (130) einen vorher annullierten Identifizierer in der örtlichen Annullierungsliste (150) vor Ersatz ausschließt, und zwar auf Basis des Vergleichs des Zugriffsidentifizierers (101) mit dem vorher annullierten Identifizierer.

6. System, das die nachfolgenden Elemente umfasst:
- einen Empfänger (220), der dazu vorgesehen ist, eine erste Anzahl neu annullierter Identifizierer (201) von einer oder mehreren vertrauten Behörden zu empfangen,
- einen Selektor (230), der dazu vorgesehen ist, eine zweite Anzahl neu annullierter Identifizierer (109) aus der ersten Anzahl neu annullierter Identifizierer (201) und einer Anzahl vorher annullierter Identifizierer zu selektieren, und
- ein Mittel zum Weiterleiten der zweiten Anzahl neu annullierter Identifizierer (109) zu der Zugriffseinrichtung (110),
**dadurch gekennzeichnet, dass** der Selektor (230) die zweite Anzahl neu annullierter Identifizierer (109) auf Basis eines beliebigen Prozesses selektiert.

7. System nach Anspruch 6, wobei:
- das Mittel zum Weiterleiten der zweiten Anzahl Folgendes umfasst:
-- einen Codierer (240), der die zweite Anzahl in ein Medium (241) einbettet, das Content-Material (161) enthält.

8. Verfahren zum Ermöglichen einer annullierbaren Zugriffssteuerung, wobei dieses Verfahren die nachfolgenden Verfahrensschritte aufweist:
- das Empfangen (220) einer ersten Anzahl neu annullierter Identifizierer (201) von einer oder mehreren vertrauten Behörden,
- das Selektieren (230) einer zweiten Anzahl neu annullierter Identifizierer (109) aus der ersten Anzahl neu annullierter Identifizierer (201) und einer Anzahl vorher annullierter Identifizierer, und
- das Weiterleiten der zweiten Anzahl neu annullierter Identifizierer (109) zu einer Zugriffseinrichtung (110),
**gekennzeichnet durch** Selektion der zweiten Anzahl neu annullierter Identifizier (109), und zwar auf Basis eines beliebigen Prozesses.

9. Verfahren nach Anspruch 8, wobei
- der Schritt der Weiterleitung der zweiten Anzahl Folgendes umfasst:
-- das Codieren (240) der zweiten Anzahl in einem Medium (241), das Content-Material (161) enthält.

10. Verfahren zur Steuerung des Zugriffs auf Content-Material (111, 161), wobei dieses Verfahren Folgendes umfasst:
- das Einhalten einer Liste annullierter Identifizierer (150),
- das Empfangen (320) eines neuen annullierten Identifizierers (109),
- das Empfangen (410) eines Zugriffsidentifizierers (101),
- das Sperren (480) des Zugriffs auf das Content-Material (161) auf Basis eines Vergleichs (440) des Zugriffsidentifizierers (101) der Liste annullierter Identifizierer (150),
**gekennzeichnet durch**
- Selektion (330) eines beliebigen annullierten Identifizierers aus der Liste annullierter Identifizierer (150),
- das Ersetzen (340) des beliebigen annullierten Identifizierers in der Liste annullierter Identifizierer (150) **durch** den neuen annullierten Identifizierer (109).

11. Verfahren nach Anspruch 10, wobei der Schritt der Sperrung des Zugriffs Folgendes umfasst:
- das Gewähren (420) von Zugriff während einer Anfangszeitdauer, und
- das Sperren (480) von Zugriff nach (470) der Anfangszeitdauer.

12. Verfahren nach Anspruch 11, wobei dieses Verfahren weiterhin Folgendes umfasst:
- das Ermitteln der Anfangszeitdauer auf Basis von wenigstens: einem beliebigen Prozess, einer Dauer, die mit dem Content-Material (111, 161) assoziiert ist, oder einer vorbestimmten Zeitdauer.

13. Verfahren nach Anspruch 10, wobei dieses Verfahren weiterhin Folgendes umfasst:
- das Markieren (460) eines vorher annullierten Identifizierers der Liste annullierter Identifizierer (150) um diesen von der Selektion als den beliebigen annullierten Identifizierer auszuschließen, und zwar auf Basis des Vergleichs des Zugriffsidentifizierers (101) mit der Liste annullierter Identifizierer (150).

## Revendications

1. Système comprenant :
une liste d'annulations locale (150) qui contient une pluralité d'identificateurs annulés,
un dispositif d'accès (110) qui contrôle l'accès au matériau du contenu (161, 111) sur la base d'une comparaison d'un identificateur d'accès (101) avec une pluralité d'identificateurs annulés, et
un récepteur (120) qui reçoit au moins un nouvel identificateur annulé (109), **caractérisé par**
un dispositif de remplacement (130) qui remplace de manière aléatoire au moins un identificateur annulé de la pluralité d'identificateurs annulés par le au moins un nouvel identificateur annulé (109).

2. Système selon la revendication 1, dans lequel :
le dispositif d'accès (110) inhibe l'accès après une période de temps à partir de l'accès initial au matériau contenu (111).

3. Système selon la revendication 1, dans lequel :
la période de temps est basée sur au moins une période associée au matériau contenu (111, 161), une période aléatoire et une période prédéterminée.

4. Système selon la revendication 1, dans lequel :
l'identificateur d'accès (101) comprend une certification cryptographique.

5. Système selon la revendication 1, dans lequel :
le dispositif de remplacement (130) exclut un identificateur annulé précédemment dans la liste d'annulations locale (150) pour le remplacement aléatoire sur la base de la comparaison de l'identificateur d'accès (101) avec l'identificateur précédemment annulé.

6. Système comprenant :
un récepteur (220) qui est configuré pour recevoir une première pluralité d'identificateurs récemment annulés (201) d'une ou de plusieurs autorités sécurisées,
un sélecteur (230) qui est configuré pour sélectionner une seconde pluralité de nouveaux identificateurs annulés (109) dans la première pluralité d'identificateurs récemment annulés (201) et une pluralité d'identificateurs précédemment annulés, et
un moyen de communication de la seconde pluralité de nouveaux identificateurs annulés (109) avec un dispositif d'accès (110),
**caractérisé en ce que** le sélecteur (230) sélectionne la seconde pluralité de nouveaux identificateurs annulés (109) sur la base d'un procédé aléatoire.

7. Système selon la revendication 6, dans lequel :
le moyen de communication de la seconde pluralité comprend un codeur (240) qui intègre la seconde pluralité à l'intérieur d'un support (241) qui contient le matériau contenu (161).

8. Procédé pour faciliter le contrôle d'accès annulable comprenant :
la réception (220) d'une première pluralité d'identificateurs récemment annulés (201) d'une ou de plusieurs autorités sécurisées,
la sélection (230) d'une seconde pluralité de nouveaux identificateurs annulés (109) de la première pluralité d'identificateurs récemment annulés (201) et d'une pluralité d'identificateurs précédemment annulés, et
la communication de la seconde pluralité de nouveaux identificateurs annulés (109) à un dispositif d'accès (110),
**caractérisé par** la sélection de la seconde pluralité de nouveaux identificateurs annulés (109) sur la base d'un procédé aléatoire.

9. Procédé selon la revendication 8, dans lequel l'étape de communication de la seconde pluralité comprend le codage (240) de la seconde pluralité à l'intérieur d'un support (241) qui contient le matériau contenu (161).

10. Procédé de contrôle d'accès à un matériau contenu (111, 161) comprenant
le maintien d'une liste d'identificateurs annulés (150),
la réception (320) d'un nouvel identificateur annulé (109),
la réception (410) d'un identificateur d'accès (101),
l'inhibition (480) de l'accès au matériau contenu (161) sur la base d'une comparaison (440) de l'identificateur d'accès (101) à la liste d'identificateurs annulés (150), **caractérisé par**
la sélection (330) d'un identificateur annulé aléatoire dans la liste d'identificateurs annulés (150), et par
le remplacement (340) de l'identificateur annulé aléatoire dans la liste d'identificateurs annulés (150) par le nouvel identificateur annulé (109).

11. Procédé selon la revendication 10, dans lequel l'étape d'inhibition de l'accès comprend
l'octroi (420) de l'accès pendant une période de temps initiale et
l'inhibition (480) de l'accès après (470) la période de temps initiale.

12. Procédé selon la revendication 11, comprenant en outre :
la détermination de la période de temps initiale sur la base d'au moins un procédé aléatoire, d'une période associée au matériau contenu (111, 161) et d'une période de temps prédéterminée.

13. Procédé selon la revendication 10, comprenant en outre :
le marquage (460) d'un identificateur précédemment annulé de la liste d'identificateurs annulés (150) pour l'exclure de la sélection comme identificateur annulé aléatoire, sur la base de la comparaison de l'identificateur d'accès (101) avec la liste d'identificateurs annulés (150).
